# FASCICULE DE BREVET EUROPEEN

(11) **EP 0 509 868 B1**
(45) Date de publication et mention de la délivrance du brevet: **21.06.1995**
(21) Numéro de dépôt: 92400883.2
(22) Date de dépôt: 31.03.1992
(51) Int. Cl.: B60T 13/57, B60T 13/569, B60T 13/52

(54) **Servomoteur pneumatique**
Pneumatischer Servomotor
Pneumatic servomotor

(30) Priorité: 17.04.1991 FR 9104704
(43) Date de publication de la demande: 21.10.1992
(73) Titulaire: ALLIEDSIGNAL EUROPE SERVICES TECHNIQUES, 93700 Drancy (FR)
(72) Inventeur: Gautier, Jean-Pierre, Bendix Europe, F-93700 Drancy (FR); Verbo, Ulysse, Bendix Europe, F-93700 Drancy (FR)
(74) Mandataire: Bentz, Jean-Paul

(56) Documents cités:
- DE-A- 3 941 604
- FR-A- 2 261 911
- FR-A- 2 537 524

## Description

La présente invention concerne les servomoteurs pneumatiques, et plus particulièrement du type de ceux qui sont utilisés pour fournir une assistance au freinage des véhicules automobiles.

Des servomoteurs de ce type comprennent de façon classique un piston comportant une partie tubulaire arrière et une jupe et qui, à l'aide d'une membrane déroulante, définit une chambre avant reliée en permanence à une source de dépression et une chambre arrière reliée sélectivement à la chambre avant ou à l'atmosphère par un moyen de valve actionné par une tige de commande susceptible de s'appuyer, par l'intermédiaire d'un plongeur, sur l'une des faces d'un disque de réaction solidaire d'une tige de poussée, un ressort de rappel de la tige de commande étant disposé entre la jupe du piston et le plongeur, le moyen de valve comportant un clapet rigidifié par un insert et coopérant par une partie active avec un premier siège de valve formé sur le plongeur et avec un second siège de valve formé sur le piston, le clapet étant formé par une membrane tubulaire souple, la partie active du clapet étant située entre les deux extrémités de la membrane tubulaire souple.

De tels servomoteurs, tels qu'illustrés par exemple par le document EP-A-0 004 477, s'ils ont un fonctionnement satisfaisant, présentent néanmoins quelques inconvénients. C'est ainsi que, pour éviter que la tige de commande n'ait une course morte trop longue, on est obligé de concevoir le moyen de valve de façon telle que la "levée de clapet" entre le clapet et le second siège de valve soit la plus faible possible. Il s'ensuit donc que, lors du freinage, le passage offert à l'air atmosphérique vers la chambre arrière est réduit, de même que le passage offert à l'air de la chambre arrière vers la chambre avant lors du défreinage. Le fonctionnement de ces servomoteurs est donc accompagné de bruits d'aspiration d'air, qui peuvent devenir gênants, d'autant plus que la structure du moyeu du piston, présentant un seul passage radial vers la chambre arrière et un seul passage axial vers la chambre avant, induit en plus des turbulences importantes dans l'air en mouvement. De tels servomoteurs présentent également des dispositifs de réglage de la valeur du saut du servomoteur, soit pour en réduire les variations dues aux tolérances de fabrication dans une production en série, soit pour l'ajuster à une valeur particulière. Ces systèmes de réglage sont souvent très complexes, mais surtout il s'agit de systèmes internes au servomoteur. Le réglage du saut doit donc avoir lieu avant l'assemblage du servomoteur selon des procédés complexes mettant en jeu des outillages spécifiques et délicats à mettre en oeuvre. De plus, lorsqu'on désire changer la valeur du saut du servomoteur, soit parce qu'elle résulte d'un mauvais réglage, soit parce qu'on désire lui conférer une autre valeur, il est alors nécessaire de procéder au démontage du servomoteur pour effectuer ce réglage, ce qui est long, délicat, et source supplémentaire d'erreurs de manipulation.

La présente invention a par conséquent pour objet de prévoir un servomoteur dont la course morte soit la plus faible possible, dont le saut soit réglable à toute valeur désirée après l'assemblage final du servomoteur, par l'extérieur, et dont le fonctionnement soit silencieux.

Selon la présente invention, le plongeur comporte une partie avant, une partie active déplaçable en translation par rapport à la partie avant, et une partie arrière vissée sur la partie avant, la partie active étant en butée contre la partie arrière et le premier siège de valve étant formé sur la partie active :

D'autres buts, caractéristiques et avantages ressortiront de la description qui suit d'un mode de réalisation de la présente invention, donnée à titre non limitatif, en référence aux dessins annexés dans lesquels :
- La Figure 1 est une vue de côté, en coupe longitudinale, représentant la partie centrale d'un servomoteur pneumatique d'assistance au freinage de type connu, par exemple du document précité, et
- La Figure 2 est une vue de côté, en demi-coupe longitudinale, représentant la partie centrale d'un servomoteur pneumatique d'assistance au freinage réalisé conformément à la présente invention.

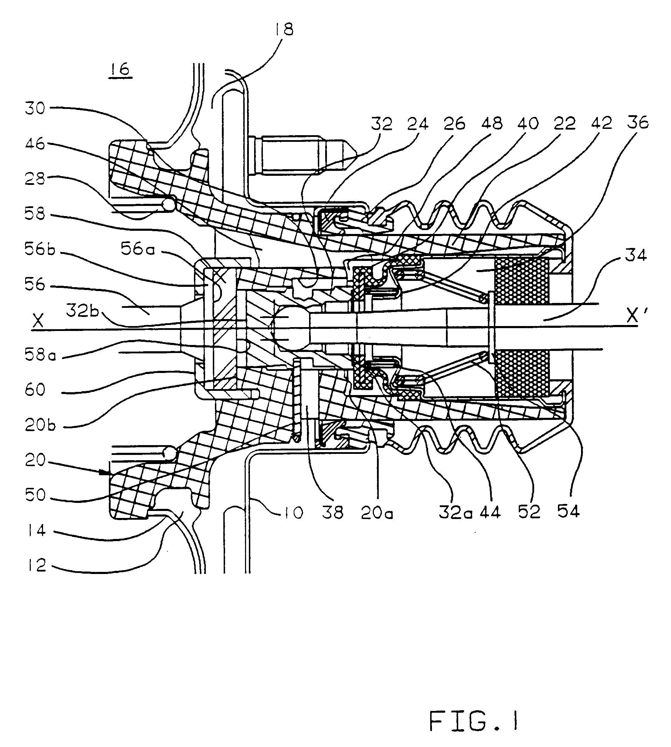

La Figure 1 représente une partie d'un servomoteur d'assistance au freinage prévu pour être placé de façon habituelle entre la pédale de frein d'un véhicule et le maître-cylindre commandant le circuit de freinage hydraulique de ce véhicule. Par convention, on appelle avant du servomoteur la partie de ce dernier tournée vers le maître-cylindre et arrière du servomoteur la partie tournée vers la pédale de frein.

Le servomoteur de la Figure 1 comprend une enveloppe extérieure 10 en forme de coquille, présentant une symétrie de révolution autour d'un axe X-X′. Seule la partie centrale arrière de cette enveloppe 10 est représentée sur la Figure 1.

Une membrane déroulante souple en élastomère 12, renforcée dans sa partie centrale par un disque support métallique 14 encore appelé jupe, définit à l'intérieur de l'espace délimité par l'enveloppe 10 une chambre avant 16 et une chambre arrière 18. Le bord périphérique extérieur (non représenté) de la membrane 12 est fixé de façon étanche sur l'enveloppe extérieure 10. Le bord périphérique intérieur de cette même membrane se termine par un bourrelet reçu de façon étanche dans une gorge annulaire formée sur la surface périphérique extérieure d'un piston creux d'assistance 20 disposé selon l'axe X-X′ du servomoteur. Ce piston creux 20 se prolonge vers l'arrière sous la forme d'une partie tubulaire 22 qui traverse de façon étanche la paroi arrière de l'enveloppe 10. L'étanchéité de cette traversée est assurée par un joint d'étanchéité annulaire armé 24 qui est fixé par une bague 26 dans une partie centrale tubulaire prolongeant vers l'arrière la paroi arrière de l'enveloppe 10.

Un ressort de compression 28 interposé entre le piston 20 et la paroi avant (non représentée) de l'enveloppe extérieure 10 maintient normalement le piston 20 et la jupe 14 dans une position arrière de repos illustrée sur la Figure 1, dans laquelle la chambre arrière 18 présente son volume minimal et la chambre avant 16 son volume maximal.

Dans sa partie centrale située entre la partie arrière tubulaire 22 et la partie avant dans laquelle sont fixées la membrane 12 et la jupe 14, le piston 20 présente un alésage 30 dans lequel est reçu en coulissement un plongeur 32 présentant également une symétrie de révolution autour de l'axe X-X′. L'extrémité avant d'une tige de commande 34 du servomoteur, disposée également selon l'axe X-X′, est montée rotulante dans le plongeur 32. L'extrémité arrière (non représentée) de cette tige 34, qui fait saillie à l'extérieur de la partie tubulaire 22 du piston 20, est commandée directement par la pédale de frein du véhicule (non représentée).

L'espace annulaire 36 délimité entre la tige de commande 34 et la partie tubulaire 22 du piston 20 débouche vers l'atmosphère extérieure à l'arrière du servomoteur, par exemple par l'intermédiaire d'un filtre à air. Vers l'avant, ce même espace annulaire peut communiquer avec la chambre arrière 18 au travers d'un passage radial 38 formé dans la partie centrale du piston, lorsque des moyens d'assistance commandés par le plongeur 32 sont actionnés.

De façon classique, ces moyens d'assistance comprennent une valve trois voies comportant un clapet annulaire 40 monté dans la partie tubulaire du piston et deux sièges de valve annulaires 20a et 32a formés respectivement sur la partie centrale du piston 20 et sur le plongeur 32.

Le clapet 40 constitue l'extrémité avant, de plus petit diamètre, d'un manchon souple en élastomère dont l'extrémité arrière se termine par un bourrelet monté de façon étanche à l'intérieur de la partie tubulaire 22 du piston 20. Ce bourrelet est maintenu en place par une coupelle métallique 42, sur laquelle prend appui un ressort de compression 44 tendant à déplacer le clapet 40 vers l'avant.

Le siège de valve annulaire 32a est formé sur la face d'extrémité arrière du plongeur 32. De façon comparable, le siège de valve annulaire 20a est formé sur la face d'extrémité arrière de la partie centrale du piston 20, autour du siège 32a. Selon la position du plongeur 32 à l'intérieur du piston 20, cet agencement permet au clapet 40 d'être constamment en appui étanche avec l'un au moins des sièges de valve 32a et 20a sous l'action du ressort 44.

Un second passage 46 est formé dans la partie centrale du piston 20, approximativement parallèlement à son axe X-X′, pour faire communiquer la chambre avant 16 du servomoteur avec une chambre annulaire 48 formée autour du clapet 40, à l'intérieur de la partie tubulaire 22 du piston 20. Lorsque le plongeur 32 occupe sa position arrière de repos illustrée sur la Figure 1, dans laquelle le clapet 40 est en appui étanche sur le siège 32a du plongeur 32 et écarté du siège 20a du piston 20, les chambres avant 16 et arrière 18 du servomoteur communiquent ainsi entre elles par le passage 46, la chambre annulaire 48 et le passage 38.

D'une manière elle aussi classique, au moins un organe de butée 50 monté dans la partie centrale du piston 20 délimite la course axiale du plongeur 32 à l'intérieur de ce dernier. Le plongeur 32 est normalement maintenu dans la position arrière de repos définie par l'organe 50 au moyen d'un ressort de compression 52 interposé entre la coupelle 42 et une rondelle 54 elle-même en appui sur un épaulement formé sur la tige de commande 34.

Dans sa partie centrale, le piston 20 comprend une face avant annulaire 20b au centre de laquelle débouche l'alésage 30. Cette face avant annulaire 20b du piston 20 agit sur une face arrière 56a d'une tige de poussée 56, au travers d'un disque de réaction 58 en un matériau déformable tel qu'un élastomère. De façon plus précise, la tige de poussée 56 et le disque de réaction 58 sont disposés selon l'axe X-X′ du servomoteur, dans le prolongement de la tige de commande 34 et du plongeur 32. La surface arrière 56a de la tige de poussée 56 est formée sur une plaque en forme de disque 56b constituant l'extrémité arrière de la tige 56. La plaque 56b ainsi que le disque de réaction 58 sont coiffés par un capot 60 centré sur l'axe X-X′ du servomoteur et coopérant avec une gorge annulaire formée sur la partie centrale du piston 20, autour de la face avant annulaire 20b de ce dernier.

Le fonctionnement de ce servomoteur connu est classique et peut être décrit succinctement de la façon suivante.

Lorsque le servomoteur est installé sur un véhicule, la chambre avant 16 communique en permanence avec une source de vide.

Dans un premier temps, l'enfoncement de la pédale de frein par le conducteur a pour effet d'égaler l'effort de précontrainte du ressort 52 diminué de l'effort de précontrainte du ressort 44. Au cours de ce léger déplacement de la tige de commande 34 et du plongeur 32, le clapet 40, sous l'action du ressort 44, suit le siège 32a du plongeur 32, jusqu'à ce qu'il vienne au contact du siège 20a du piston ; les chambres avant 16 et arrière 18 du servomoteur sont alors isolées l'une de l'autre.

Dans cette première phase de l'actionnement du servomoteur, la force exercée sur la tige de commande 34 n'engendre aucune force sur la tige de poussée 56 à la sortie du servomoteur.

Dans une deuxième phase de l'actionnement du frein, le plongeur 32 est déplacé suffisamment vers l'avant pour que le clapet 40 soit en contact étanche avec le siège 20a du piston et commence à s'éloigner du siège 32a du plongeur. Dans ces conditions, la chambre arrière 18 du servomoteur est isolée de la chambre avant 16 et entre en communication avec l'atmosphère. Une force d'assistance est donc engendrée qui tend à déplacer le piston 20 vers l'avant. Ce déplacement est transmis à la tige de poussée 56 par le disque de réaction 58.

Au cours de cette deuxième phase d'actionnement des freins, la force d'assistance exercée par le piston 20 ne déforme pas suffisamment le disque de réaction 58 pour que ce dernier remplisse totalement l'espace qui le sépare initialement du plongeur 32. Par conséquent, la force de sortie appliquée au maître-cylindre par la tige de poussée 56 augmente brutalement, alors que la force exercée sur la tige de commande 34 reste inchangée.

Cette augmentation brusque de l'effort de sortie correspond à ce qu'on l'appelle le saut du servomoteur, c'est-à-dire au seuil au delà duquel la force d'assistance engendrée dans le servomoteur et exercée sur le disque de réaction 58 par le piston 20 devient suffisante pour que la face avant 32b du plongeur vienne en contact du disque de réaction 58.

De façon classique, comme représenté à la Figure 1, la valeur du saut est réglé par l'organe de butée 50 qui détermine la position arrière de repos du plongeur 32 par rapport au piston 20, et donc la distance au repos entre la face avant 32b du plongeur et la face arrière 58a du disque de réaction. On comprend donc bien que, si le saut du servomoteur ne présente pas la valeur désirée, un démontage complet du servomoteur soit nécessaire pour changer cet organe de butée ou le plongeur ou les deux.

Au cours du fonctionnement ultérieur du servomoteur, la chambre arrière 18, qui communiquait auparavant avec la chambre avant 16 et se trouvait donc sous une pression réduite, aspire donc l'air à la pression atmosphérique à travers le passage de valve de faible section entre le clapet 40 et le siège de plongeur 32a. Il s'ensuit donc une entrave importante au passage de l'air, et donc un fonctionnement bruyant. De plus, l'air qui provient par exemple de la moitié supérieure de la Figure 1 pour pénétrer dans le passage 38, devra contourner la tige de commande 34 et le plongeur 32 pour arriver au passage radial 38, d'où un écoulement turbulent et bruyant de l'air, ajouté aux sifflements dus à la traversée de l'interstice entre le clapet 40 et le siège de plongeur 32a.

Les mêmes phénomènes se produisent lors d'un défreinage, lorsque l'air sous une pression plus élevée est amené à passer de la chambre arrière 18 vers la chambre avant 16 par le passage radial 38, l'interstice entre le clapet 40 et le siège de piston 20a, la chambre annulaire 48 autour du clapet 40 et le passage axial 46. Ces phénomènes ne seront donc pas décrits en détail.

On comprend donc qu'il est hautement désirable de réaliser un servomoteur dont la valeur du saut puisse être réglée facilement à toute valeur désirée sans qu'il soit besoin de démonter le servomoteur, et donc de l'extérieur du servomoteur, et dont le fonctionnement soit silencieux.

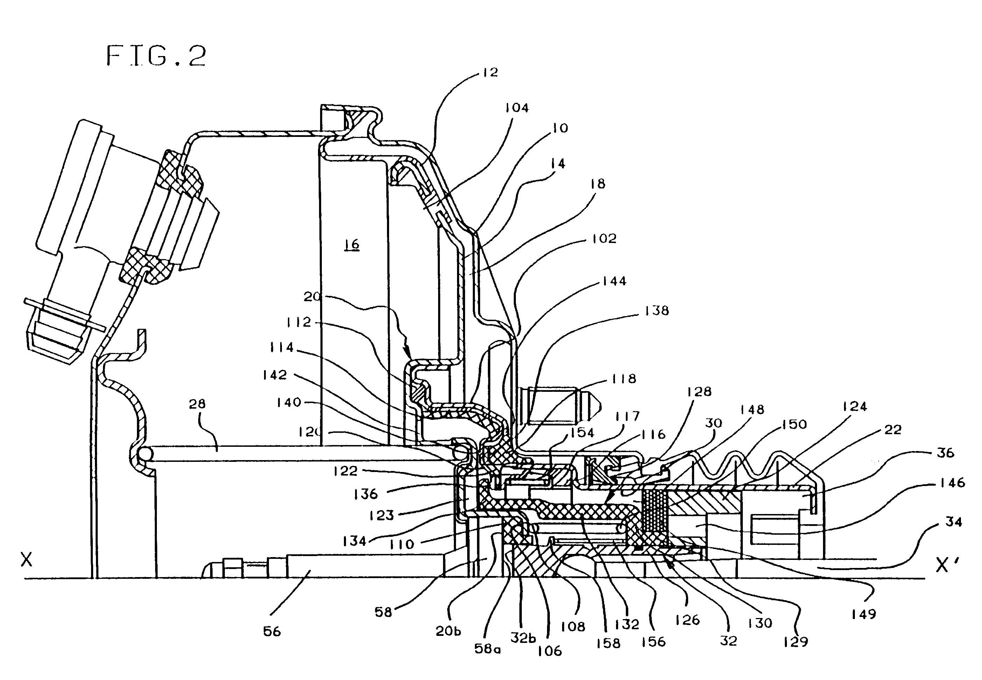

Ce but est atteint grâce à l'invention dont un exemple d'un mode de réalisation est représenté sur la Figure 2, où les éléments identiques à ceux de la Figure 1 portent les mêmes numéros de référence.

On voit sur la Figure 2 que le piston et le plongeur ont été profondément modifiés pour atteindre ce but. Le piston est composite, il comporte une partie arrière tubulaire 22 et une partie avant de révolution autour de l'axe X-X′ formant un voile intermédiaire de piston 102 de forme générale approximativement tronconique. Sur l'extrémité avant de plus grand diamètre du voile 102 est fixée, par exemple emmanchée à force, la jupe 14, sur le bord périphérique extérieur de laquelle est fixée la membrane déroulante 12, par exemple au moyen d'ouvertures 104 pratiquées près du bord de la jupe 14 pour parfaire l'accrochage de la matière de la membrane 12. Le bord périphérique intérieur de la jupe 14 est replié en direction de l'axe X-X′ de façon à former un épaulement 106 coopérant avec un épaulement 108 formé sur un manchon 110 présentant une face annulaire avant 20b destinée à coopérer avec le disque de réaction 58 comme on l'a décrit en relation avec la Figure 1.

Entre la jupe 14 et l'extrémité avant de plus grand diamètre du voile 102 est maintenu de façon étanche un bourrelet 112 formant l'extrémité avant d'une membrane tubulaire souple 114 dont l'extrémité arrière forme un bourrelet 116 maintenu de façon étanche dans le piston 20, dans la zone de raccordement de la partie tubulaire arrière 22 avec le voile intermédiaire 102, par exemple au moyen d'une coupelle métallique cylindrique 117.

Une partie intermédiaire de la membrane tubulaire souple 114 reçoit sur sa face arrière un insert annulaire 118, de façon à la rigidifier dans un plan perpendiculaire à l'axe X-X′. La membrane 114 et l'insert 118 comportent des ouvertures 120 et 122 respectivement, disposées les unes en face des autres.

On voit donc que la partie de membrane 114 rigidifiée par l'insert 118 peut se déplacer axialement dans le volume annulaire 123 situé entre la face arrière de la jupe 14 et la face avant du voile intermédiaire de piston 102, la jupe 14 et le voile 102 étant solidaires l'un de l'autre, le voile 102 étant lui-même le prolongement vers l'avant de la partie arrière tubulaire 22 du piston.

Le plongeur 32 est formé avec une partie arrière 124 coulissant dans l'alésage 30 de la partie tubulaire 22 et d'une partie avant 126 coulissant à l'intérieur du manchon 110 et coopérant avec le disque de réaction 58. Ces deux parties sont réunies par vissage de l'une sur l'autre. Sur la partie avant 126 coulisse de façon étanche une troisième partie 128 du plongeur. Cette troisième partie 128, ou partie active du plongeur, comporte une portion 129 cylindrique de diamètre intérieur égal au diamètre extérieur de la partie avant 126 du plongeur 32 et apte à coulisser sur lui de façon étanche. Cette partie 129 est prolongée à son extrémité avant par une partie s'étendant radialement vers l'extérieur pour former une partie annulaire 130, puis, à partir du bord périphérique extérieur de celle-ci, axialement vers l'avant à l'intérieur de la partie tubulaire 22 pour former une partie cylindrique 132, s'étendant autour du manchon 110 et pénétrant dans le volume annulaire 123. L'extrémité avant de la partie cylindrique 132 est elle-même prolongée radialement vers l'extérieur par une partie annulaire 134, venant dans le volume annulaire 123 en avant de la partie de la membrane 114 rigidifiée par l'insert 118 et dont le diamètre extérieur est légèrement supérieur au diamètre intérieur de l'insert 118. La partie annulaire 134 forme un premier siège de valve avec la membrane 114 rigidifiée par l'insert 118 formant quant à elle un clapet 138. Le siège de valve est avantageusement constitué par un renflement 136, formé par exemple sur le bord périphérique extérieur de la partie annulaire 134 et dirigé vers l'arrière, ou en variante, comme on l'a représenté, par un renflement formé à la surface avant de la membrane 114.

Un deuxième siège de valve 140 est formé sur la face arrière de la jupe 14, selon un cercle de diamètre légèrement inférieur au diamètre extérieur de l'insert 118. Le siège de valve 140 pourra avantageusement être formé sur une partie convexe de la face arrière de la jupe 14, de sorte que la partie concave correspondante de la face avant de la jupe 14 forme un logement pour le ressort de compression 28. Comme précédemment, ce siège de valve 140 pourra être formé par un renflement réalisé sur la face arrière de la jupe 14 ou, comme représenté, par un renflement réalisé sur la surface avant de la membrane 114.

Des ouvertures 142 sont pratiquées dans la jupe 14 pour faire communiquer la chambre avant 16 avec la partie du volume annulaire 123 située devant le clapet 138. De même, des ouvertures 144 sont pratiquées dans le voile intermédiaire 102 pour faire communiquer la chambre arrière 18 avec la partie du volume annulaire 123 située derrière le clapet 138. Enfin, des ouvertures 146 sont pratiquées dans la partie arrière 124 du plongeur 32 pour faire communiquer l'espace annulaire 36 derrière le plongeur 32, où règne la pression atmosphérique, avec le volume annulaire 123, par l'intermédiaire de l'espace annulaire 148 entre la partie cylindrique 132 du plongeur 32 et la partie tubulaire 22 du piston. On pourra avantageusement prévoir, comme on l'a représenté, un filtre à air 149 au niveau des ouvertures 146, pour éviter l'intrusion d'impuretés dans le servomoteur.

Le piston 20 est ramené dans sa position arrière de repos par le ressort 28 agissant sur la face avant de la jupe 14. Il vient alors en butée contre la membrane 114 dans sa partie rigidifiée par l'insert 118, qui vient lui-même en butée contre la face avant de la partie arrière de l'enveloppe 10. Le second passage de valve 138-140 entre le siège de valve 140 du piston 20 et le clapet 138 est alors fermé.

Le plongeur 32 et la tige de commande 34 sont ramenés dans leur position arrière de repos par un ressort de rappel 150, prenant appui d'une part sur la face arrière de la partie de la jupe 14 qui forme l'épaulement 106, et d'autre part sur la face avant de la partie annulaire 130 de la troisième partie 128 du plongeur 32. Dans cette position, le plongeur 32 vient en butée, par l'intermédiaire de la partie annulaire 134 formant le premier siège de valve, contre la membrane 114 dans sa partie rigidifiée par l'insert 118, lui-même déjà en butée contre la face avant de la partie arrière de l'enveloppe 10, comme on l'a vu plus haut. Le premier passage de valve 136-138 entre le siège de valve 136 du plongeur 32 et le clapet 138 est alors lui aussi fermé.

D'autre part, le clapet 138 est sollicite vers l'avant par un ressort de clapet 154 prenant appui d'une part sur la face arrière de la membrane 114 rigidifiée par l'insert 118 formant le clapet 138, et d'autre part sur la face avant du bourrelet 116 de la membrane 114 ou celle de la coupelle cylindrique 117 comme on l'a représenté.

Enfin, le plongeur 32 comporte un ressort 156 disposé entre la face arrière d'un épaulement 158 formé sur la partie avant 126 du plongeur 32 et la face avant de la partie annulaire 130 de la troisième partie 128 du plongeur 32, de sorte à solliciter la troisième partie 128 en écartement de la partie avant 126 et en butée contre la partie arrière 124.

On voit donc qu'on a réalisé conformément à l'invention un servomoteur comportant un piston mobile composite constituée de la jupe 14, équipée de la membrane déroulante 12, et solidaire du voile intermédiaire 102, lui-même se prolongeant vers l'arrière par la partie arrière tubulaire 22, ce piston mobile étant susceptible d'agir sur la tige de poussée 56, au travers du disque de réaction 58, par l'intermédiaire de la face annulaire avant 20b du manchon 110, ce dernier servant également d'élément de guidage pour le plongeur 32.

Les moyens de valve sont constituées par le clapet 138 formé sur une partie intermédiaire d'une membrane tubulaire fixée par ses extrémités au piston mobile composite, coopérant avec un siège de valve 136 de plongeur et un siège de valve 140 de piston mobile composite.

Le fonctionnement de ce servomoteur réalisé conformément à l'invention se déduit aisément des explications qui précèdent. Le servomoteur étant au repos tel qu'on l'a représenté sur la Figure 2, la chambre avant 16 est en communication avec une source de dépression et est isolée de la chambre arrière 18 par les passages de valve 140-138 et 136-140 qui sont tous deux fermés comme on l'a vu plus haut. Un actionnement de la tige de commande 34 a pour effet de faire avancer le plongeur 32 à l'encontre de l'action du ressort 150. Le clapet 138 reste plaqué sur le siège de valve 140 du piston 20 sous l'action du ressort 154, tandis que le siège de valve 136 commence à s'éloigner du clapet 138. De l'air à la pression atmosphérique est donc immédiatement admis dans la chambre arrière éventuellement par le filtre à air 149, et par les ouvertures 146 dans la partie arrière du plongeur 32, l'espace annulaire 148 entre la partie cylindrique 132 du plongeur 32 et la partie tubulaire 22 du piston, le passage de valve 136-138, les ouvertures 120 et 122 formées dans la membrane 114 et l'insert 118, et enfin les ouvertures 144 dans le voile intermédiaire 102.

On voit donc bien qu'on a réalisé, conformément à un objet de l'invention, un servomoteur dont la course morte est la plus réduite possible puisqu'on a supprimé toute la phase de fonctionnement qui était nécessaire à l'isolement des chambres avant et arrière l'une de l'autre. La seule course morte du servomoteur de l'invention est celle qui est due à l'élasticité du premier siège de valve 136 nécessaire pour assurer son étanchéité, mais elle peut être considérée comme négligeable.

On voit aussi que, grâce à l'invention, l'air est admis dans la chambre arrière 18 à travers le passage de valve 136-138 qui est d'un diamètre plusieurs fois plus grand que dans un servomoteur classique tel que décrit en relation avec la Figure 1. On a ainsi pu réaliser des passages de valve 136-138 d'un diamètre égal à cinq fois le diamètre d'un passage de valve classique.

Il s'ensuit, dans cet exemple, que la section de passage offerte à l'air est elle aussi multipliée par cinq, et donc que le débit d'air vers la chambre arrière est lui aussi multiplié par cinq. On obtient donc bien un servomoteur dont le fonctionnement est silencieux puisqu'une telle section de passage agrandie permet à l'air de circuler sans provoquer de bruits d'aspiration et autres sifflements. Il est bien entendu que la valeur de cinq n'est pas critique, mais a seulement été choisie comme exemple.

Tout autre facteur d'agrandissement du passage de valve par rapport à un servomoteur classique pourra être choisie en fonction du résultat désiré.

On a vu plus haut que le saut du servomoteur se produit à ce stade de fonctionnement du servomoteur, l'air admis dans la chambre arrière du servomoteur créant une différence de pression entre les deux faces du piston, engendrant une force d'assistance qui tend à déplacer le piston 20 vers l'avant, cette force étant transmise à la tige de poussée 56 par l'épaulement 106 de la jupe 14 agissant sur le manchon 110, lui-même agissant sur le disque de réaction 58. Il se produit alors une augmentation brusque de la force exercée par la tige de poussée 56 jusqu'à ce que le disque de réaction 58 soit suffisamment déformé pour remplir l'espace qui sépare initialement sa face arrière de la face avant du plongeur 32.

La valeur du saut du servomoteur est donc conditionnée par la distance axiale au repos entre la face avant du plongeur et la face arrière du disque de réaction. Grâce à l'invention, cette valeur peut être facilement ajustée à toute valeur désirée, une fois le servomoteur assemblé. En effet, on a vu que le plongeur 32 est constitué de la partie arrière 124 vissée sur la partie avant 126, un ressort 156 prenant appui sur un épaulement de cette dernière partie pour solliciter vers l'arrière la partie active 128 sur laquelle est formé le premier siège de valve 136, en butée contre la deuxième partie 124. On comprend aisément que, une fois le servomoteur totalement assemblé tel qu'il est représenté sur la Figure 2, une rotation relative des parties arrière 124 et avant 126, par exemple en en maintenant une fixe tandis que l'on imprime une rotation autour de l'axe X-X′ à l'autre à l'aide d'un outil approprié, se transforme en un déplacement en translation de la partie avant 126 par rapport à la troisième partie 128. On fait ainsi varier la côte ou distance axiale entre la face avant du plongeur 32 et le premier siège de valve 136. Le plongeur étant au repos en appui sur le clapet 138 sur lequel vient également en appui la jupe 14 du piston 20 pour former le second siège de valve de piston 140, et la jupe 14 comportant l'épaulement 106 en portée sur l'épaulement 108 du manchon 110 dont la face annulaire avant est au contact du disque de réaction 58, la rotation relative des parties arrière 124 et avant 126 fait donc bien varier la distance entre la face avant du plongeur 32 et la face arrière du disque de réaction 58.

La valeur du saut du servomoteur selon l'invention peut donc être réglée de l'extérieur, de façon simple par tout procédé approprié. On pourra par exemple appliquer sur la tige de poussée 56 un effort correspondant au saut désiré du servomoteur, ce qui provoque une déformation du disque de réaction 58.

Il suffira alors de visser la partie avant 126 du plongeur dans la partie arrière 124 pour faire avancer la face avant 32b du plongeur 32 jusqu'à ce qu'elle vienne en contact de la partie de la surface arrière 58a déformée du disque de réaction, contact qu'on peut détecter par tout moyen, par exemple à l'aide d'une jauge de contrainte placée sur la tige de commande 34. En relâchant alors l'effort exercé sur la tige de poussée 56, on aura un servomoteur réglé à la valeur du saut voulue. On pourra également faire fonctionner le servomoteur en l'actionnant par sa tige de commande 34. Des capteurs d'effort sur la tige de commande 34 et la tige de poussée 56 permettront de tracer le diagramme de la force de sortie en fonction de la force d'entrée, et donc d'ajuster le saut du servomoteur à la valeur désirée.

On a donc bien réalisé conformément à l'invention, un servomoteur dont la valeur du saut peut être ajustée à toute valeur désirée et ce de l'extérieur du servomoteur, et donc sans qu'il soit besoin de le démonter. Ce servomoteur présente une course morte extrêmement réduite, et fonctionne sans bruit.

On comprendra que le phénomène de réduction du bruit de fonctionnement du servomoteur se produit également lors d'un défreinage. En effet, lorsque la force appliquée à la tige de commande décroît, celle-ci recule et entraîne dans son mouvement le plongeur 32. Ce faisant, le siège de valve 136 du plongeur 32 revient au contact du clapet 138, le siège de valve 140 étant toujours au contact du clapet 138. Quand le plongeur 32 continue de reculer, le siège de valve 136 du plongeur fait alors s'éloigner le clapet 138 du siège de valve 140. L'air contenu dans la chambre arrière 18 est alors aspiré dans la chambre avant par les ouvertures 144 dans le voile intermédiaire 102, les ouvertures 122 et 120 dans la membrane 114 et l'insert 118, le passage de valve 138-140 et enfin les ouvertures 142 dans la jupe 14. On voit donc là encore que l'air est amené à s'écouler à travers le passage de valve 138-140, d'un diamètre nettement supérieur aux passages de valve classiques, et donc de surface supérieure qui permet un débit supérieur, d'où il résulte également un fonctionnement silencieux en phase de défreinage.

L'invention permet également de réduire dans des proportions importantes le bruit de fonctionnement du servomoteur. On a vu en effet que, lors du freinage, l'air s'écoule par les ouvertures 146, l'espace annulaire 148, le passage de valve 136-138, et les ouvertures 120, 122 et 144, et lors du défreinage, par les ouvertures 144, 122 et 120, le passage de valve 138-140 et les ouvertures 142. La conception particulière du servomoteur selon l'invention permet de prévoir que les ouvertures 142, 120, 122, 144 et 146 soient en nombre égal, régulièrement réparties autour de l'axe X-X′, et de sorte que leurs centres soient dans un même plan, ainsi qu'on l'a représenté sur la Figure 2. De la sorte, les masses d'air mises en mouvement lors du fonctionnement du servomoteur de la présente invention auront une vitesse dont les composantes ne seront contenues que dans un plan, par exemple celui de la Figure 2. En d'autres termes, l'écoulement de l'air dans le servomoteur est parfaitement symétrique autour de l'axe X-X′ dans tous les cas de fonctionnement, c'est-à-dire que toutes les turbulences sont éliminées, ainsi que les bruits en résultant.

On voit donc bien qu'on a réalisé conformément à la présente invention un servomoteur pneumatique dans lequel la disposition particulière des moyens de valve et de plongeur permet un réglage facile de la valeur du saut en opérant de l'extérieur du servomoteur totalement assemblé, le servomoteur présentant en outre une course morte extrêmement réduite et un fonctionnement silencieux. Bien entendu, l'invention n'est pas limité au mode de réalisation qui a été décrit à titre d'exemple, mais est susceptible de recevoir de nombreuses variantes qui apparaîtront à l'homme du métier. C'est ainsi par exemple que la membrane déroulante et la membrane tubulaire souple sur laquelle est formé le clapet peuvent être formées d'une seule pièce. De même, l'invention pourra être appliquée à des servomoteurs en tandem ou à chambre additionnelle.

## Revendications

1. Servomoteur pneumatique d'assistance au freinage comportant une enveloppe (10) à l'intérieur de laquelle se trouve un piston (22, 14, 102) formé d'une partie tubulaire arrière (22) supportant une jupe (14) et qui, à l'aide d'une membrane déroulante (12), définit une chambre avant (16) reliée en permanence à une source de dépression et une chambre arrière (18) reliée sélectivement à la chambre avant (16) ou à l'atmosphère par un moyen de valve (136, 138, 140) actionné par une tige de commande (34) susceptible de s'appuyer, par l'intermédiaire de la face avant (32b) d'un plongeur (32), sur la face arrière (58a) d'un disque de réaction (58) solidaire d'une tige de poussée (56), un ressort de rappel (150) de la tige de commande (34) étant disposé entre la jupe (14) du piston et le plongeur (32), le moyen de valve (136, 138, 140) comportant un clapet (138) rigidifié par un insert (118) et coopérant par une partie active avec un premier siège de valve (136) formé sur le plongeur (32) et avec un second siège de valve (140) formé sur le piston (14), le clapet (138) étant formé par une membrane tubulaire souple (114), la partie active du clapet (138) étant située entre les deux extrémités (112, 116) de la membrane tubulaire souple (114), caractérisé en ce que le plongeur (32) comporte une partie avant (126), une partie active (128) déplaçable en translation par rapport à la partie avant (126) et une partie arrière (124) vissée sur la partie avant (126), en ce que la partie active (128) est en butée contre la partie arrière (124), et en ce que le premier siège de valve (136) est formé sur la partie active (128).

2. Servomoteur selon la revendication 1, caractérisé en ce que la partie active (128) coulisse de façon étanche sur la partie avant (126), un ressort (156) étant disposé entre les parties avant (126) et active (128) du plongeur (32).

3. Servomoteur selon la revendication 2, caractérisé en ce que la partie avant (126) comporte la face avant (32b) du plongeur (32) qui est susceptible de s'appuyer sur la face arrière (58a) du disque de réaction (58).

4. Servomoteur selon la revendication 1, caractérisé en ce que le piston (22, 14, 102) comporte de plus un voile intermédiaire de piston (102) définissant avec la jupe (14) du piston un volume annulaire (123), et en ce que les premier (136) et second (140) sièges de valve et le clapet (138) sont disposés dans le volume annulaire (123), le second siège de valve (140) étant formé sur la jupe (14) du piston.

5. Servomoteur selon la revendication 4, caractérisé en ce que des ouvertures (142) sont pratiquées dans la jupe (14) pour faire communiquer la chambre avant (16) avec le volume annulaire (123), et des ouvertures (144) sont pratiquées dans le voile intermédiaire (102) pour faire communiquer la chambre arrière (18) avec le volume annulaire (123).

6. Servomoteur selon la revendication 5, caractérisé en ce que le clapet (138) comporte des ouvertures (120) situées dans sa partie active entre le premier siège de valve (136) et le second siège de valve (140), et permettant la communication entre la chambre avant (16) et la chambre arrière (18).

7. Servomoteur selon l'une quelconque des revendications précédentes, caractérisé en ce que des ouvertures (146) sont pratiquées dans le plongeur (32) pour faire communiquer le volume annulaire (123) avec l'atmosphère.

8. Servomoteur selon la revendication 7, caractérisé en ce que les ouvertures (146, 120, 142, 144) pratiquées dans le plongeur (32), le clapet (138), la jupe (14) et le voile (102) sont régulièrement réparties autour de l'axe de symétrie du servomoteur, sont en nombre égal et ont leurs centres situés dans un même plan.

9. Servomoteur selon l'une des revendications précédentes, caractérisé en ce que le ressort (150) de rappel de la tige de commande (34) est disposé entre la jupe (14) du piston et la partie active (128) du plongeur (32).

10. Servomoteur selon l'une des revendications précédentes, caractérisé en ce qu'un ressort de clapet (154) sollicite la partie active du clapet (138) vers l'avant, ce ressort de clapet (154) étant concentrique au ressort (150) de rappel de la tige de commande (34) et de diamètre supérieur.

11. Procédé de réglage de la valeur du saut d'un servomoteur conforme à l'une quelconque des revendications précédentes, caractérisé en ce qu'il comporte les étapes suivantes :
- On applique sur la tige de poussée (56) un effort correspondant à la valeur du saut désirée du servomoteur.
- On visse la partie avant (126) du plongeur (32) dans la partie arrière (124) pour faire avancer la face avant (32b) du plongeur.
- On détecte le contact entre la face avant (32b) du plongeur et la face arrière (58a) du disque de réaction (58).
- On relâche l'effort appliqué à la tige de poussée (58).

## Claims

1. Pneumatic brake-booster comprising a casing (10), within which is located a piston (22, 14, 102) formed from a rear tubular part (22) supporting a skirt (14) and which, by means of an unrolling diaphragm (12), defines a front chamber (16) connected permanently to a vacuum source and a rear chamber (18) connected selectively to the front chamber (16) or to the atmosphere by a valve means (136, 138, 140) actuated by a control rod (34) capable of bearing, by means of the front face (32b) of a plunger (32), on the rear face (58a) of a reaction disk (58) fixed to a push rod (56), a spring (150) for the return of the control rod (34) being arranged between the skirt (14) of the piston and the plunger (32), the valve means (136, 138, 140) comprising a shutter (138) made rigid by an insert (118) and interacting by an active part with a first valve seat (136) formed on the plunger (32) and with a second valve seat (140) formed on the piston (14), the shutter (138) being formed by a flexible tubular diaphragm (114), the active part of the shutter (138) being located between the two ends (112, 116) of the flexible tubular diaphragm (114), characterized in that the plunger (32) comprises a front part (126), an active part (128) displaceable in translational motion relative to the front part (126) and a rear part (124) screwed to the front part (126), in that the active part (128) is up against the rear part (124), and in that the first valve seat (136) is formed on the active part (128).

2. Booster according to Claim 1, characterized in that the active part (128) slides sealingly on the front part (126), a spring (156) being arranged between the front (126) and active (128) parts of the plunger (32).

3. Booster according to Claim 2, characterized in that the front part (126) comprises the front face (32b) of the plunger (32) which is capable of bearing on the rear face (58a) of the reaction disk (58).

4. Booster according to Claim 1, characterized in that the piston (22, 14, 102) comprises, furthermore, an intermediate piston web (102) defining with the skirt (14) of the piston an annular volume (123), and in that the first (136) and second (140) valve seats and the shutter (138) are arranged in the annular volume (123), the second valve seat (140) being formed on the skirt (14) of the piston.

5. Booster according to Claim 4, characterized in that orifices (142) are made in the skirt (14) in order to put the front chamber (16) in communication with the annular volume (123), and orifices (144) are made in the intermediate web (102) in order to put the rear chamber (18) in communication with the annular volume (123).

6. Booster according to Claim 5, characterized in that the shutter (138) has orifices (120) located in its active part between the first valve seat (136) and the second valve seat (140) and allowing communication between the front chamber (16) and the rear chamber (18).

7. Booster according to any of the preceding claims, characterized in that orifices (146) are made in the plunger (32) in order to put the annular volume (123) in communication with the atmosphere.

8. Booster according to Claim 7, characterized in that the orifices (146, 120, 142, 144) made in the plunger (32), the shutter (138), the skirt (14) and the web (102) are uniformly distributed about the axis of symmetry of the booster, are of equal number and have their centers located in the same plane.

9. Booster according to any of the preceding claims, characterized in that the spring (150) for the return of the control rod (34) is arranged between the skirt (14) of the piston and the active part (128) of the plunger (32).

10. Booster according to any of the preceding claims, characterized in that a shutter spring (154) stresses the active part of the shutter (138) forwards, this shutter spring (154) being concentric relative to the spring (150) for the return of the control rod (34) and of larger diameter.

11. Process for adjusting the value of the jump of a booster according to any of the preceding claims, characterized in that it involves the following steps:
- A force corresponding to the desired value of the booster jump is applied to the push rod (56).
- The front part (126) of the plunger (32) is screwed into the rear part (124) in order to cause the front face (32b) of the plunger to advance.
- Contact between the front face (32b) of the plunger and the rear face (58a) of the reaction disk (58) is detected.
- The force applied to the push rod (58) is released.

## Patentansprüche

1. Pneumatischer Bremsunterstützungs-Servomotor mit einem Gehäuse (10), in dessen Inneren sich ein Kolben (22, 14, 102) befindet, der aus einem rohrförmigen hinteren Abschnitt (22) gebildet ist, der eine Schürze (14) trägt und mit Hilfe einer Abrollmembran (12) eine permanent mit einer Unterdruckquelle verbundene vordere Kammer (16) und eine hintere Kammer (18) abgrenzt, die wahlweise mit der vorderen Kammer (16) oder mit der Atmosphäre über ein Ventilmittel (136, 138, 140) verbunden ist, das von einer Steuerstange (34) betätigt ist, die in der Lage ist, sich über die vordere Seite (32b) eines Tauchkolbens (32) an der hinteren Seite (58a) einer fest mit einer Schubstange (56) verbundenen Reaktionsscheibe (58) abzustützen, wobei zwischen der Schürze (14) des Kolbens und dem Tauchkolben (32) eine Rückstellfeder (150) für die Steuerstange (34) angeordnet ist, wobei das Ventilmittel (136, 138, 140) ein Ventilelement (138) aufweist, das durch einen Einsatz (118) verstärkt ist und über einen aktiven Abschnitt mit einem auf dem Tauchkolben (32) gebildeten ersten Ventilsitz (136) und mit einem auf dem Kolben (14) gebildeten zweiten Ventilsitz (140) zusammenzuwirken, wobei das Ventilelement (138) aus einer nachgiebigen rohrförmigen Membran (114) gebildet ist, wobei der aktive Abschnitt des Ventilelements (138) zwischen den beiden Enden (112, 116) der nachgiebigen rohrförmigen Membran (114) angeordnet ist, dadurch gekennzeichnet, daß der Tauchkolben (32) einen vorderen Abschnitt (126), einen bezüglich des vorderen Abschnitts (126) translatorisch verstellbaren aktiven Abschnitt (128) sowie einen auf den vorderen Abschnitt (126) aufgeschraubten hinteren Abschnitt (124) aufweist, daß der aktive Abschnitt (128) an dem hinteren Abschnitt (124) anliegt und daß der erste Ventilsitz (136) auf dem aktiven Abschnitt (128) gebildet ist.

2. Servomotor nach Anspruch 1, dadurch gekennzeichnet, daß der aktive Abschnitt (128) in dichter Weise auf dem vorderen Abschnitt (126) gleitet, wobei zwischen dem vorderen Abschnitt (126) und dem aktiven Abschnitt (128) des Tauchkolbens (32) eine Feder (156) angeordnet ist.

3. Servomotor nach Anspruch 2, dadurch gekennzeichnet, daß der vordere Abschnitt (126) die vordere Seite (32b) des Tauchkolbens (32) enthält, die in der Lage ist, sich an der hinteren Seite (58a) der Reaktionsscheibe (58) abzustützen.

4. Servomotor nach Anspruch 1, dadurch gekennzeichnet, daß der Kolben (22, 14, 102) außerdem eine Kolben-Zwischenabdeckung (102) aufweist, die zusammen mit der Schürze (14) des Kolbens ein ringförmiges Volumen (123) bestimmt, und daß der erste Ventilsitz (136) und der zweite Ventilsitz (140) sowie das Ventilelement (138) in dem ringförmigen Volumen (123) angeordnet sind, wobei der zweite Ventilsitz (140) auf der Schürze (14) des Kolbens gebildet ist.

5. Servomotor nach Anspruch 4, dadurch gekennzeichnet, daß in der Schürze (14) Öffnungen (142) ausgebildet sind, um die vordere Kammer (16) mit dem ringförmigen Volumen (123) zu verbinden, und daß in der Zwischenabdeckung (102) Öffnungen (144) ausgebildet sind, um die Kammer (18) mit dem ringförmigen Volumen (123) zu verbinden.

6. Servomotor nach Anspruch 5, dadurch gekennzeichnet, daß das Ventilelement (138) Öffnungen (120) aufweist, die in seinem aktiven Abschnitt zwischen dem ersten Ventilsitz (136) und dem zweiten Ventilsitz (140) angeordnet sind und die Verbindung zwischen der vorderen Kammer (16) und der hinteren Kammer (18) ermöglichen.

7. Servomotor nach einem der vorhergehenden Ansprüche, dadurch gekennzeichnet, daß in dem Tauchkolben (32) Öffnungen (146) ausgebildet sind, um das ringförmige Volumen (123) mit der Atmosphäre zu verbinden.

8. Servomotor nach Anspruch 7, dadurch gekennzeichnet, daß die in dem Tauchkolben (32), dem Ventilelement (138), der Schürze (14) sowie der Abdeckung (102) ausgebildeten Öffnungen (146, 120, 142, 144) regelmäßig um die Symmetrieachse des Servomotors verteilt, von gleicher Anzahl und mit ihren Mittelpunkten in derselben Ebene angeordnet sind.

9. Servomotor nach einem der vorhergehenden Ansprüche, dadurch gekennzeichnet, daß die Rückstellfeder (150) der Steuerstange (34) zwischen der Schürze (14) des Kolbens und dem aktiven Abschnitt (128) des Tauchkolbens (32) angeordnet ist.

10. Servomotor nach einem der vorhergehenden Ansprüche, dadurch gekennzeichnet, daß eine Ventilelementfeder (154) den aktiven Abschnitt des Ventilelements (138) nach vorne beaufschlagt, wobei diese Ventilelementfeder (154) konzentrisch zur Rückstellfeder (150) der Steuerstange (34) ist und einen größeren Durchmesser aufweist.

11. Verfahren zum Einstellen des Sprungwertes eines Servomotors gemäß einem der vorhergehenden Ansprüche, dadurch gekennzeichnet, daß es die folgenden Schritte enthält:
- man bringt auf die Schubstange (56) eine dem gewünschten Sprungwert des Servomotors entsprechende Kraft auf,
- man schraubt den vorderen Abschnitt (126) des Tauchkolbens (32) in den hinteren Abschnitt (124) ein, um die vordere Seite (32b) des Tauchkolbens nach vorne zu verstellen,
- man erfaßt die Berührung zwischen der vorderen Seite (32b) des Tauchkolbens und der hinteren Seite (58a) der Reaktionsscheibe (58),
- man löst die auf die Schubstange (58) aufgebrachte Kraft.
